# EUROPÄISCHE PATENTSCHRIFT

(11) **EP 1 015 644 B1**
(45) Veröffentlichungstag und Bekanntmachung des Hinweises auf die Patenterteilung: **04.10.2001**
(21) Anmeldenummer: 98938499.5
(22) Anmeldetag: 12.08.1998
(51) Int. Cl.: C21B 13/00

(54) **VERFAHREN UND ANLAGE ZUR DIREKTREDUKTION VON TEILCHENFÖRMIGEM EISENOXIDHALTIGEM MATERIAL**
METHOD AND APPARATUS FOR THE DIRECT REDUCTION OF A MATERIAL CONTAINING IRON OXIDE IN A PARTICULATE FORM
PROCEDE ET INSTALLATION POUR LA REDUCTION DIRECTE DE MATERIAU RENFERMANT DE L'OXYDE DE FER SOUS FORME DE PARTICULES

(30) Priorität: 18.08.1997 AT 138297
(43) Veröffentlichungstag der Anmeldung: 05.07.2000
(73) Patentinhaber: VOEST-ALPINE INDUSTRIEANLAGENBAU GMBH, 4020 Linz (AT); Brifer International Ltd., Bridgetown, Barbados (BB)
(72) Erfinder: ZELLER, Siegfried, A-4060 Leonding (AT); MILLIONIS, Konstantin, * (AT); REIDETSCHLÄGER, Johann, A-4040 Linz (AT); KEPPLINGER, Leopold, Werner, A-4060 Leonding (AT); ZIRNGAST, Johann, A-4614 Marchtrenk (AT); SCHENK, Johannes, A-4040 Linz (AT); WHIPP, Roy, Hubert, Jr., Windermere, FL 34786 (US)
(74) Vertreter: Kopecky, Helmut, Dipl.-Ing.
(86) Internationale Anmeldenummer: AT9800191
(87) Internationale Veröffentlichungsnummer: WO9909220

(56) Entgegenhaltungen:
- EP-A- 0 571 358
- WO-A-97/13879
- DD-A- 130 155
- GB-A- 1 115 712
- GB-A- 1 349 477
- US-A- 3 205 066
- US-A- 5 082 251

## Beschreibung

Die Erfindung betrifft ein Verfahren zur Direktreduktion von teilchenförmigem eisenoxidhältigem Material im Wirbelschichtverfahren, wobei Synthesegas, wie reformiertes Erdgas, als Reduktionsgas in mehrere für das Reduktionsgas in Serie hintereinander geschaltete Wirbelschichtzonen eingeleitet wird und im Gegenstrom zu dem teilchenförmigen eisenoxidhältigen Material von Wirbelschichtzone zu Wirbelschichtzone geführt wird, und wobei in der in Fließrichtung des eisenoxidhältigen Materials ersten Wirbelschichtzone eine Erhitzung des eisenoxidhältigen Materials und in der bzw. den weiteren Wirbelschichtzone(n) die Direktreduktion durchgeführt wird, sowie eine Anlage zur Durchführung des Verfahrens.

Ein Verfahrenähnlich dieser Art ist aus der US-A - 5,082,251 und der WO-A- 92/02458 und ein derartiges Verfahren ist aus der EP-A-0 571 358 bekannt. Gemäß der US-A - 5,082,251 wird eisenreiches Feinerz in einem System von in Serie angeordneten Wirbelschichtreaktoren mit Hilfe von Reduktionsgas unter erhöhtem Druck reduziert. Das so erzeugte Eisenpulver wird anschließend einer Heiß- oder Kaltbrikettierung unterworfen.

Das Reduktionsgas wird durch katalytische Reformierung von entschwefeltem und vorgewärmtem Erdgas mit überhitztem Wasserdampf in einem konventionellen Reformerofen erzeugt. Das reformierte Gas wird anschließend in einem Wärmetauscher gekühlt und nachfolgend wird durch CO-Konvertierung mit Hilfe eines Eisenoxid-Katalysators der H₂-Anteil im Reduktionsgas erhöht. Anschließend wird das dabei entstehende sowie das vom Reformer stammende CO₂ in einem CO₂-Wäscher entfernt.

Dieses Gas wird mit dem nur teilweise verbrauchten Reduktionsgas (Topgas) vermischt, erhitzt und in drei Stufen (drei Wirbelschichtreaktoren) im Gegenstrom das Feinerz reduziert.

Der Fluß des Erzes beginnt mit einer Trocknung und einer anschließenden Siebung. Sodann gelangt das Erz in einen Vorwärmreaktor, in dem Erdgas verbrannt wird. In drei folgenden Reaktoren wird das Feinerz unter erhöhtem Druck reduziert.

Aus der EP-A - 0 571 358 ist es bekannt, die Reduktion von Feinerz nicht ausschließlich über die stark endotherme Reaktion mit H₂ gemäß

*Fe*₂*O*₃ + 3*H*₂ = 2*Fe* + 3*H*₂*O* - Δ*H*,

sondern zusätzlich über die Reaktion mit CO, gemäß

*Fe*₂*O*₃ + 3*CO* = 2*Fe* + 3*CO*₂ + Δ*H*,

die exotherm ist, durchzuführen. Hierdurch gelingt es, die Betriebskosten, insbesondere die Energiekosten, beträchtlich zu senken.

Gemäß dem Stand der Technik kommt es bei der Direktreduktion aufgrund der Kinetik der bekannten Verfahren zur Magnetitbildung, u.zw. in einer stetig von außen nach innen wachsenden Schicht, die sich auf jedem Partikel bzw. Kom des eisenoxidhältigen Materials bildet. Es hat sich in der Praxis gezeigt, daß die Magnetitbildung für die Direktreduktion mit Reduktionsgas hemmend ist. So gelingt es nur mehr mit erhöhtem Aufwand, d.h. Erhöhung des Reduktionsgasverbrauches, eine mehr oder weniger vollständige Reduktion des eingesetzten eisenoxidhältigen Materials zu erzielen. Insbesondere ist es hierzu notwendig, auch in den erstangeordneten Wirbelschichtzonen Reduktionsgas mit hohem Reduktionspotential zur Verfügung zu stellen.

Die Erfindung bezweckt die Vermeidung dieser Nachteile und Schwierigkeiten und stellt sich die Aufgabe, ein Verfahren der eingangs beschriebenen Art dahingehend weiterzubilden, daß der Energiebedarf gesenkt wird, indem das chemische Potential des Reduktionsgases vollständig ausgenutzt wird. Insbesondere sollen die Betriebskosten beträchtlich gesenkt werden, indem das Reduktionsgas sowohl hinsichtlich seines Reduktionspotentials als auch hinsichtlich seiner fühlbaren Wärme optimal genutzt wird.

Diese Aufgabe wird erfindungsgemäß dadurch gelöst,
- daß in der ersten Wirbelschichtzone eine Temperatur des eisenoxidhältigen Materials entweder unter 400° C, vorzugsweise unter 350°C,
- oder über 580°C, vorzugsweise bei etwa 650°C,
- oder eine Temperatur im Bereich von 400 bis 580°C eingestellt wird,
- wobei bei einer Temperatureinstellung auf unter 400°C der Temperaturbereich zwischen 400°C und 580°C in der in Fließrichtung des eisenoxidhältigen Materials der ersten Wirbelschichtzone nachgeordneten Wirbelschichtzone innerhalb einer Zeitspanne von 10 Minuten, vorzugsweise innerhalb von 5 Minuten, durchschritten wird, und
- wobei bei einer Temperatureinstellung auf über 580°C der Temperaturbereich zwischen 400°C und 580°C innerhalb einer Zeitspanne von maximal 10 Minuten, vorzugsweise 5 Minuten durchschritten wird, und
- wobei weiters bei einer Temperatureinstellung im Bereich von 400°C bis 580°C das eisenoxidhältige Material in diesem Temperaturbereich maximal 10 Minuten, vorzugsweise 5 Minuten verweilt und unmittelbar nach Erreichen der gewünschten Temperatur in die nächstfolgende Wirbelschichtzone weitergeleitet wird.

Durch diese Mäßnahmen gelingt es, die Magnetitschichtenbildung wirkungsvoll zu vermeiden bzw. auf ein erträgliches Maß zu reduzieren. Die Ausbildung einer Magnetitschicht erfolgt nämlich sehr rasch, u.zw. umso schneller je näher die Temperatur des eisenoxidhältigen Materials bei der Grenztemperatur von etwa 580°C liegt. Ein an der Oberfläche eines Partikels aus eisenoxidhältigem Material bzw. eines Erzkornes ausgebildeter Magnetit ist dichter als das Erz selbst und erhöht somit den Diffusionswiderstand der Grenzfläche zwischen Reduktionsgas und Eisenerz. Dadurch wird die Reaktionsgeschwindigkeit verringert. Laut Baur-Glaessner-Diagramrn geschieht diese Ausbildung einer dichten Magnetitschicht auf der Oberfläche eines Eisenerzkornes vorwiegend bis zu einer Temperatur des Eisenerzes von 580°C. Bei einer Temperatur des Eisenerzes unter 400°C ist wiederum die Magnetitausbildung verlangsamt und daher werden weniger rasch dichte Magnetitschichten ausgebildet.

Die Reaktionskinetik der Magnetitbildung wird durch die Zusammensetzung des Gases und des Feststoffes beeinflußt. Die Moleküle des Reduktionsgases müssen aus dem äußeren Gasstrom durch die adhärierende Gasgrenzschicht und durch die Makro- und Mikroporen zum Reaktionsort gelangen. Dort läuft der Sauerstoffausbau ab. Das oxidierte Gas gelangt auf dem gleichen Weg zurück. Das Erzkorn wird somit von außen nach innen reduziert. Dabei nimmt die Porosität zu, da der ausgebaute Sauerstoff Hohlräume hinterläßt und das ursprüngliche Volumen des Erzkornes kaum schrumpft. Die Reaktionsfront wandert von außen nach innen in das Erzkorn hinein. Die Konzentration des Reduktionsgases nimmt bei dichten Schichten von außen nach innen ab. Das Gas diffundiert zuerst von außen durch die bereits reduzierte Schale bis zur Reaktionsfront, wo es sich umsetzt und dann als Reaktionsprodukt zurückdiffundiert. Bei porösen Oberflächen läuft innerhalb der Reaktionsfront die Phasengrenzreaktion an den Wänden der Poren ab, während das Gas zugleich auch innerhalb diffundieren kann. Bei dichten Magnetitschichten an der Oberfläche des Erzkornes wird die Reaktionskinetik dadurch gehemmt, weil das Reduktionsgas an der Diffusion durch eben diese Schicht behindert wird und somit der Stoffaustausch des Reduktionsgases nicht wie bei porösen Erzkörnern erfolgen kann.

Die Grundidee der Erfindung ist darin zu sehen, den Übergang der Temperatur des eisenoxidhältigen Materials beim Erhitzen von 400 auf 580°C in möglichst kurzer Zeit zu bewerkstelligen sowie ein Halten in diesem kritischen Temperaturbereich zu vermeiden. Bei raschem Durchschreiten dieses Temperaturbereiches ist die Magnetitschichtbildung äußerst gering. Allenfalls kommt es zur Bildung von Wüstit, der für die Reduktion keinen Nachteil aufweist. Hierdurch ergeben sich wesentlich verbesserte Reduktionsbedingungen für die in Fließrichtung des eisenoxidhältigen Materials erste Wirbelschichtzone.

Vorteilhaft wird in jedem Fall unmittelbar nach Erreichen der gewünschten Temperatur das eisenoxidhältige Material der nachgeordneten Wirbelschichtzone überführt.

Gemäß einer bevorzugten Ausführungsform wird der Temperaturbereich zwischen 400°C und 580°C unter Vermeidung einer Haltezeit durchschritten und beträgt der durchschnittliche Temperaturgradient innerhalb des Bereiches zwischen 400°C und 580°C mindestens 20°C/min, vorzugsweise 40°C/min.

Wird in dieser ersten Wirbelschichtzone lediglich eine Temperatur von unter 400°C eingestellt, wird der Temperaturbereich zwischen 400 und 580°C in der in Fließrichtung des eisenoxidhältigen Materials zweiten Wirbelschichtzone durchlaufen, was dort mit wesentlich größerer Geschwindigkeit vor sich geht, als es unter Normalbedingungen in der ersten Wirbelschichtzone stattfinden könnte, da in der zweiten Wirbelschichtzone die Temperatur des Reduktionsgases noch wesentlich höher ist und weiters auch das Reduktionspotential höher ist. Letzteres behindert bzw. vermindert ebenfalls die Magnetitbildung. In diesem Fall erfolgt die rasche Durchschreitung des kritischen Temperaturbereiches in der zweiten Wirbelschichtzone ebenfalls in einer unterkritischen Zeitspanne.

Soll der kritische Temperaturbereich erst in der zweiten Wirbelschichtzone durchschritten werden, so stehen hierfür einige Varianten zur Verfügung:

So kann dies beispielsweise dadurch erreicht werden, daß das der ersten Wirbelschichtzone zugeführte Reduktionsgas vor Einleiten in die erste Wirbelschichtzone einer Abkühlung unterzogen wird.

Eine wirkungsvolle Temperatureinstellung auf unter 400°C in der ersten Wirbelschichtzone kann auch dadurch erzielt werden; daß das aus der der ersten Wirbelschichtzone in Fließrichtung des eisenoxidhältigen Materials nachgeordneten Wirbelschichtzone austretende Reduktionsgas nur zum Teil in die erste Wirbelschichtzone eingeleitet wird und das aus der ersten Wirbelschichtzone austretende Reduktionsgas zumindest teilweise in die erste Wirbelschichtzone rezirkuliert wird.

Gemäß einer bevorzugten Ausführungsform werden das eisenoxidhältige Material und das Gas in der ersten Wirbelschichtzone indirekt gekühlt, vorzugsweise mittels Luft oder Wasser.

Es ist auch möglich, das eisenoxidhältige Material und das Gas in der ersten Wirbelschichtzone direkt zu kühlen, vorzugsweise durch Eindüsen von Wasser und/oder Wasserdampf.

Nach einer besonders einfach durchzuführenden Variante wird ein Unterschreiten der kritischen Temperatur in der ersten Wirbelschichtzone dadurch sichergestellt, daß das eisenoxidhältige Material in der ersten Wirbelschichtzone kürzer verweilt als in den in Fließrichtung des eisenoxidhältigen Materials nachgeordneten Wirbelschichtzonen.

Um den kritischen Temperaturbereich in der ersten Wirbelschichtzone möglichst rasch zu durchschreiten, also beispielsweise innerhalb einer Zeitspanne von maximal 5 Minuten, stehen ebenfalls einige Varianten zur Verfügung:

Dies kann dadurch erzielt werden, daß das der ersten Wirbelschichtzone zugeführte Reduktionsgas vor Einleiten in die erste Wirbelschichtzone als Gesamt- oder Teilstrom erhitzt wird, vorzugsweise indirekt mittels eines Rauchgases.

Nach einer bevorzugten Variante wird die Erfindung dadurch verwirklicht, daß in die erste Wirbelschichtzone die Gesamtmenge oder nur eine Teilmenge des aus der der ersten Wirbelschichtzone in Fließrichtung des eisenoxidhältigen Materials nachgeordneten Wirbelschichtzone austretenden Reduktionsgases und zumindest eine Teilmenge eines frischen, vorzugsweise unverbrauchten Reduktionsgases zugeführt wird.

Eine weitere bevorzugte Ausführungsform ist dadurch gekennzeichnet, daß dem der ersten und/oder nachfolgenden Wirbelschichtzone zugeführten Reduktionsgas vor Eintritt desselben in die erste Wirbelschichtzone Sauerstoff oder ein sauerstoffhältiges Gas unter Bewirken einer Teilverbrennung des Reduktionsgases zugeführt wird.

Eine weitere Variante ist dadurch gekennzeichnet, daß in die erste und/oder nachfolgende Wirbelschichtzone Sauerstoff oder ein sauerstoffhältiges Gas unter Bewirken einer Teilverbrennung des Reduktionsgases eingeleitet wird.

Der kritische Temperaturbereich kann auch dadurch schnell durchschritten werden, daß das in die erste Wirbelschichtzone eingesetzte eisenoxidhältige Material im vorgewärmten Zustand, vorzugsweise im hochvorgewärmten Zustand, eingesetzt wird, insbesondere mit einer Temperatur im Bereich über 250°C.

Eine weitere bevorzugte Ausführungsform ist dadurch gekennzeichnet, daß das eisenoxidhältige Material und das Gas in der ersten Wirbelschichtzone indirekt erhitzt wird, vorzugsweise mittels eines Heißgases oder mittels eines Rauchgases oder durch Verbrennen eines Brenngases.

Selbstverständlich kann das erfindungsgemäße Ziel auch dadurch erreicht werden, daß zwei oder mehrere der oben angegebenen Varianten miteinander kombiniert zur Anwendung gelangen.

Eine erfindungsgemäße Anlage zur Durchführung der erfindungsgemäßen Verfahren mit mehreren in Serie hintereinander geschalteten Wirbelschichtreaktoren zur Aufnahme eisenoxidhältigen Materials, wobei das eisenoxidhältige Material von Wirbelschichtreaktor zu Wirbelschichtreaktor über Förderleitungen in einer Richtung und das Reduktionsgas von Wirbelschichtreaktor zu Wirbelschichtreaktor über Verbindungsleitungen in die entgegengesetzte Richtung geführt ist, ist dadurch gekennzeichnet, daß im in Fließrichtung des eisenoxidhältigen Materials ersten Wirbelschichtreaktor ein Rekuperator vorgesehen ist.

Anlagen zur Durchführung der erfindungsgemäßen Verfahren sind in den Unteransprüchen gekennzeichnet. Solche Anlagen sind zum Teil an sich bekannt, beispielsweise aus der EP-A-0 571 358 (Einstellung einer erhöhten Temperatur im ersten Reduktionsreaktor). Weiters ist aus der US-A - 3,205,066 eine Teilverbrennung mit Sauerstoff oder sauerstoffhältigem Gas in einem Wirbelbett, aus der US-A - 3,982,901 und der US-A - 3,983,927 der Einbau von Wärmetauschern in Wirbelbettreaktoren und aus der EP-A - 0 345 467 das Vorsehen von Mantelstrahl-Heizrohren in Wirbelschichtreaktoren an sich bekannt.

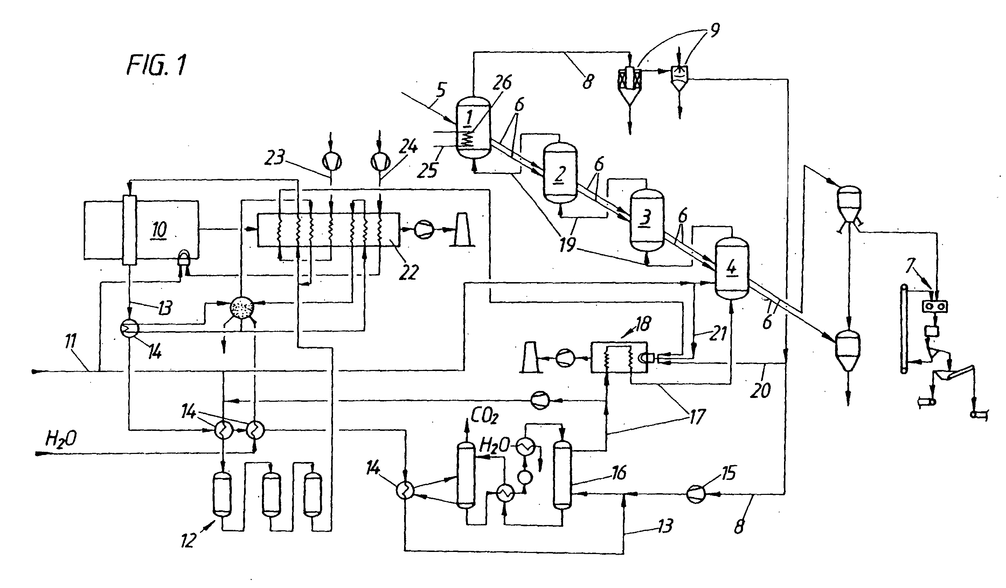

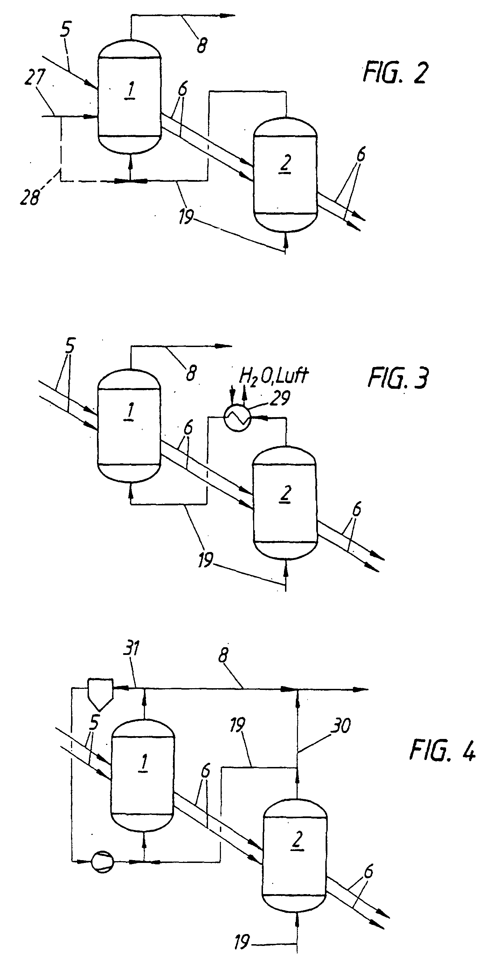

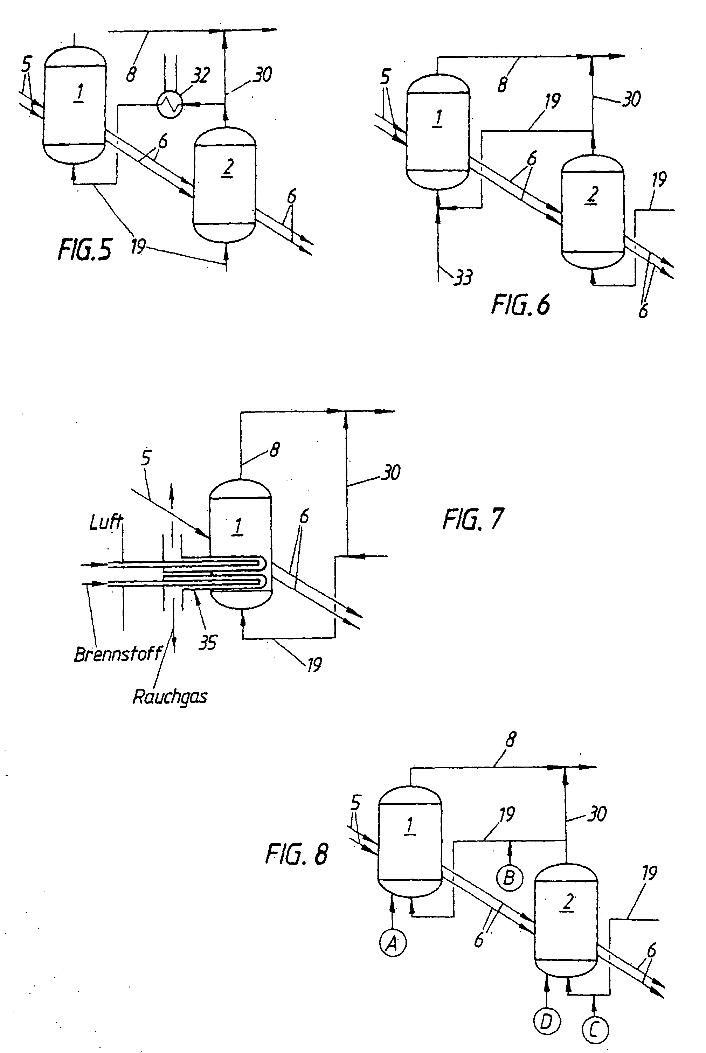

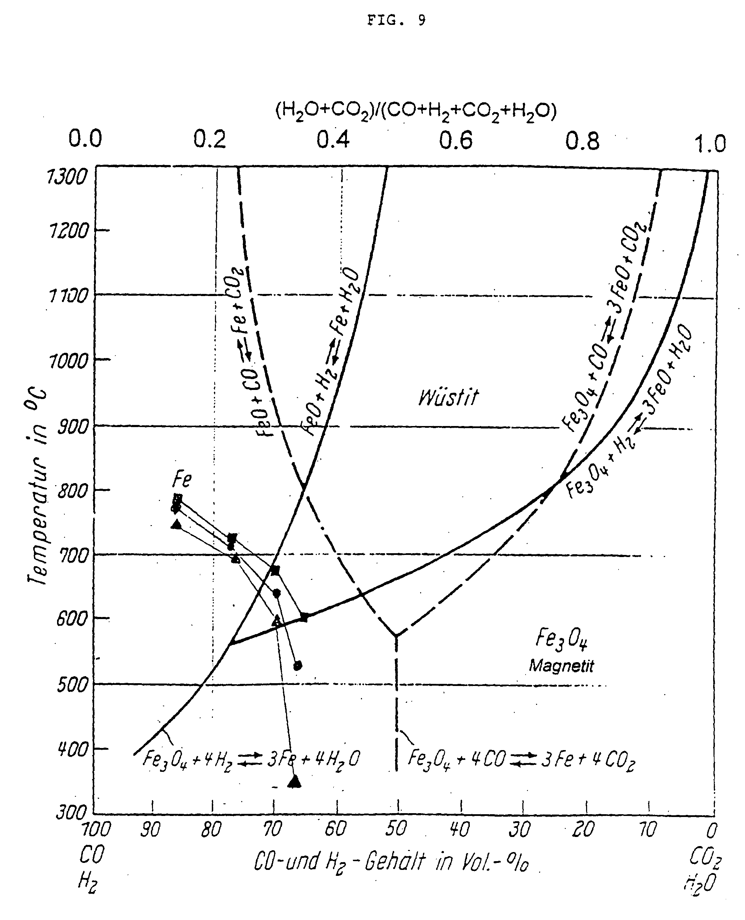

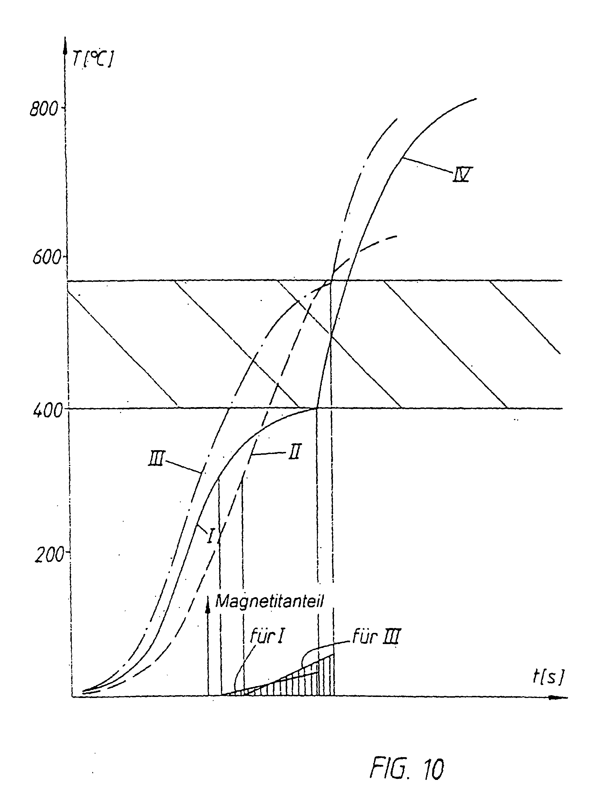

Die Erfindung ist nachfolgend anhand der Zeichnung näher erläutert, wobei Fig. 1 ein Verfahrensschema nach einer bevorzugten Ausfühiungsform zeigt, gemäß der in der ersten Wirbelschichtzone eine Temperatur des eisenoxidhältigen Materials unter 400°C eingehalten wird. Die Fig. 2 bis 4 zeigen ein Detail des in der Fig. 1 dargestellten Verfahrensschemas in jeweils abgeänderter Ausführungsform, wobei auch gemäß diesen Ausführungsformen eine Maximaltemperatur von 400°C in der ersten Wirbelschichtzone eingestellt wird. Die in den Fig. 5 bis 8 dargestellten Varianten zeigen analog zu den Fig. 2 bis 4 verschiedene Ausführungsformen des Verfahrensschemas nach Fig. 1 im Detail, wobei jedoch in der in Fließrichtung des eisenoxidhältigen Materials ersten Wirbelschichtzone eine Temperatur von über 580°C eingestellt wird. In Fig. 9 ist das Baur-Glaessner-Diagramm veranschaulicht, wobei der Reduktionsverlauf ohne und mit Beeinflussung des Temperatumiveaus in der ersten Wirbelschichtzone eingezeichnet ist. Fig. 10 veranschaulicht verschiedene erfindungsgemäße Verfahrensweisen für die Aufheizung in der ersten Wirbelschichtzone.

Die erfindungsgemäße Anlage gemäß Fig. 1 weist vier in Serie hintereinander geschaltete Wirbelschichtreaktoren 1 bis 4 auf, wobei eisenoxidhältiges Material, wie Feinerz, über eine Erzzuleitung 5 dem ersten Wirbelschichtreaktor 1 zugeleitet wird, in dem eine Aufheizung auf eine vorbestimmte Temperatur (bzw. gegebenenfalls eine Vorreduktion) stattfindet, wie später noch genauer ausgeführt wird. Anschließend wird das Feinerz von Wirbelschichtreaktor zu Wirbelschichtreaktor über Förderleitungen 6 geleitet, wobei sich innerhalb der Wirbelschichtreaktoren 1 bis 4 jeweils Wirbelschichtzonen ausbilden. Das fertig reduzierte Material (Eisenschwamm) wird in einer Brikettieranlage 7 heißbrikettiert. Erforderlichenfalls wird das reduzierte Eisen während der Brikettierung vor einer Reoxidation durch ein nicht dargestelltes Inertgas-System geschützt.

Vor Einleitung des Feinerzes in den ersten Wirbelschichtreaktor 1 wird es einer Erzvorbereitung, wie einer Trocknung und einem Sieben, unterzogen, die nicht näher dargestellt ist.

Reduktionsgas wird im Gegenstrom zum Erzdurchfluß von Wirbelschichtreaktor 4 zu Wirbelschichtreaktor 3 bis 1 geführt und als Topgas über eine Topgas-Ableitung 8 aus dem in Gasströmungsrichtung letzten Wirbelschichtreaktor 1 abgeleitet und in einem Naßwäscher 9 gekühlt und gewaschen.

Die Herstellung des Reduktionsgases erfolgt durch Reformieren von über die Leitung 11 zugeführtem und in einer Entschwefelungsanlage 12 entschwefeltem Erdgas in einem Reformer 10. Das aus Erdgas und Dampf gebildete, den Reformer 10 verlassende Gas besteht im wesentlichen aus H₂, CO, CH₄, H₂O und CO₂. Dieses reformierte Erdgas wird über die Reformgasleitung 13 einem oder mehreren Wärmetauschern 14 zugeleitet, in denen es auf 80 bis 150°C abgekühlt wird, wodurch Wasser aus dem Gas auskondensiert wird.

Die Reformgasleitung 13 mündet in die Topgas-Ableitung 8, nachdem das Topgas mittels eines Kompressors 15 verdichtet wurde. Das sich so bildende Mischgas wird durch einen CO₂-Wäscher 16 hindurchgeschickt und von CO₂ sowie von H₂S befreit. Es steht nunmehr als Reduktionsgas zur Verfügung. Dieses Reduktionsgas wird über eine Reduktionsgaszuleitung 17 in einem dem CO₂-Wäscher 16 nachgeordneten Gaserhitzer 18 auf eine Reduktionsgastemperatur von etwa 800°C erhitzt und dem in Gasdurchflußrichtung ersten Wirbelschichtreaktor 4 zugeführt, wo es mit den Feinerzen zur Erzeugung von direktreduziertem Eisen reagiert. Die Wirbelschichtreaktoren 4 bis 1 sind in Serie geschaltet; das Reduktionsgas gelangt über die Verbindungsleitungen 19 von Wirbelschichtreaktor zu Wirbelschichtreaktor. Die Anzahl der Wirbelschichtreaktoren richtet sich nach dem Gegebenheiten, wie den Eigenschaften des Reduktionsgases, dem gewünschten Reduktionsgradienten etc.

Ein Teil des Topgases wird aus dem Gas-Kreislauf 8, 17, 19 ausgeschleust, um eine Anreicherung von Inertgasen, wie N₂, zu vermeiden. Das ausgeschleuste Topgas wird über eine Zweigleitung 20 dem Gaserhitzer 18 zur Erwärmung des Reduktionsgases zugeführt und dort verbrannt. Eventuell fehlende Energie wird durch Erdgas, welches über die Zuleitung 21 zugeführt wird, ergänzt.

Die fühlbare Wärme des aus dem Reformer 10 austretenden reformierten Erdgases sowie der Reformerrauchgase wird in einem Rekuperator 22 genutzt, um das Erdgas nach Durchlauf durch die Entschwefelungsanlage 12 vorzuwärmen, den für die Reformierung benötigten Dampf zu erzeugen sowie die dem Gaserhitzer 18 über die Leitung 23 zugeführte Verbrennungsluft sowie gegebenenfalls auch das Reduktionsgas vorzuwärmen. Die dem Reformer 10 über die Leitung 24 zugeführte Verbrennungsluft wird ebenfalls vorgewärmt.

Zur Vermeidung bzw. Minimierung einer Magnetitbildung wird gemäß den in den Fig. 1 bis 4 dargestellten Ausführungsformen im Wirbelschichtreaktor 1 eine Temperatur von über 400°C vermieden. Dies geschieht gemäß Fig. 1 durch einen im Wirbelschichtreaktor 1 eingebauten Wärmetauscher 25, der im Inneren des Wirbelschichtreaktors 1 angeordnete Kühlschlangen 26 od.dgl. aufweist. Diese werden von Wasser durchströmt, das zu Dampf umgewandelt wird. Als Kühlmedium kann auch Wasserdampf verwendet werden, der an anderer Stelle des Prozesses verwertet werden kann. Anstelle der Kühlschlangen könnten auch Tauchheizflächen in den Wirbelschichtreaktor 1 eingesetzt werden.

Durch diese Maßnahme gelingt es, daß das aus dem Wirbelschichtreaktor 2 austretende und bereits teilverbrauchte Reduktionsgas so weit gekühlt wird, daß das im Wirbelschichtreaktor 1 enthaltene Erz nicht auf über 400°C aufgewärmt wird. Die Aufwärmung über 400°C bis auf die gewünschte Reduktionstemperatur erfolgt im Wirbelschichtreaktor 2, in dem das aus dem Wirbelschichtreaktor 3 stammende Reduktionsgas das Erz in sehr kurzer Zeit auf über 580°C erhitzt. Die Aufheizung erfolgt so rasch, daß eine Magnetitbildung möglichst verhindert wird.

Eine Temperaturemiedrigung im Wirbelschichtreaktor 1 kann auch durch direkte Kühlung mit Wasser und/oder Wasserdampf erzielt werden. Dies ist in Fig. 2 veranschaulicht. Wasser bzw. Wasserdampf wird über die Leitung 27 entweder direkt in den Wirbelschichtreaktor 1 und/oder über die Leitung 28 in die Verbindungsleitung 19, die zu diesem Wirbelschichtreaktor 1 führt, eingespeist. Das Einbringen dieser Medien bringt vom Energieverbrauch her gesehen keine Nachteile, da das Topgas, das aus dem Wirbelschichtreaktor 1 über die Topgas-Ableitung 8 austritt, ohnehin durch einen Wäscher 9 geleitet wird und in diesem die Restkühlung, die im Wirbelschichtreaktor 1 nicht stattfindet, vorgenommen werden muß.

Gemäß Fig. 3 erfolgt das Kühlen der Wirbelschichtzone im Wirbelschichtreaktor 1 dadurch, daß in der Verbindungsleitung 19 vom Wirbelschichtreaktor 2 zum Wirbelschichtreaktor 1 ein rekuperativer Wärmetauscher 29 vorgesehen ist, der mit Wasser, Luft od.dgl. zur Abkühlung des in den Wirbelschichtreaktor 1 eingebrachten Reduktionsgases dient. Eine Kühlung könnte auch durch Direkteindüsen von Wasser und/oder Wasserdampf erfolgen.

Gemäß Fig. 4 erfolgt das Einstellen der Maximaltemperatur von 400°C im Wirbelschichtreaktor 1 dadurch, daß ein Teil des aus dem Wirbelschichtreaktor 2 austretenden Reduktionsgases direkt zum Topgas über eine Zweigleitung 30 geführt wird und nur der restliche Teil vermischt mit einem rezirkulierten, aus dem Wirbelschichtreaktor 1 austretenden Topgas in den Wirbelschichtreaktor 1 eingeleitet wird. Zu diesem Zweck zweigt von der aus dem Wirbelschichtreaktor 1 ausgehenden Topgas-Ableitung 8 eine Zweigleitung 31 ab, die in die Verbindungsleitung 19 mündet.

Man kann auch durch eine geringere Verweilzeit des Erzes im Wirbelschichtreaktor 1 eine geringere Aufheizung des Erzes erreichen, wodurch ebenfalls die Kinetik der Reduktion positiv beeinflußt wird. In der Praxis läßt sich dies durch eine Verkleinerung des ersten Wirbelschichtreaktors 1 erzielen.

Durch all diese Maßnahmen dient der Wirbelschichtreaktor 1 nicht mehr direkt als Reduktionszone, sondern in erster Linie als Aufheizzone.

Gemäß den in den Fig. 5, 6, 7 und 8 dargestellten Varianten wird im ersten Wirbelschichtreaktor eine Temperatur von über 580°C eingestellt, wobei der Temperaturbereich - und dies ist wesentlich für die Erfindung - zwischen 400 und 580°C in einer Zeitspanne von weniger als 5 Minuten durchschritten wird. Hierbei handelt es sich nicht um eine Gastemperatur, sondern um die Temperatur des eingesetzten eisenoxidhältigen Materials, d.h. des Feinerzes.

Gemäß der in Fig. 5 dargestellten Ausführungsform wird dies dadurch erzielt, daß zumindest ein Teil des bereits teilweise verbrauchten und aus dem Wirbelschichtreaktor 2 austretenden Reduktionsgases über einen rekuperativen Wärmetauscher 32 dem Wirbelschichtreaktor 1 zugeführt wird. Der Wärmetauscher wird vorzugsweise mit Rauchgas oder einem anderen Heißgas betrieben.

Gemäß der in Fig. 6 dargestellten Ausführungsform wird das in den Wirbelschichtreaktor 1 eingeleitete und aus dem Wirbelschichtreaktor 2 stammende Reduktionsgas mit einem frischen Reduktionsgas vermischt, so daß es eine wesentlich größere Temperatur aufweist. Das zugemischte frische Reduktionsgas wird über eine Zweigleitung 33, die von der Reduktionsgas-Zuleitung 17 abzweigt, dem Wirbelschichtreaktor 1 zugeführt. Da nun ein Teil des aus dem Wirbelschichtreaktor 2 austretenden Reduktionsgases durch das frische Reduktionsgas ersetzt wird, kann ein Teil des aus dem Wirbelschichtreaktor 2 austretenden Reduktionsgases über eine Zweigleitung 30 in die Topgas-Ableitung 8 eingeleitet werden. Es muß nicht unbedingt ein völlig frisches Reduktionsgas zugemischt werden, es genügt, wenn ein Reduktionsgas dem aus dem Wirbelschichtreaktor 2 austretenden Reduktionsgas beigemengt wird, das noch ein höheres Reduktionspotential aufweist.

Gemäß Fig. 7 ist im Wirbelschichtreaktor 1 ein rekuperativer Wärmetauscher 35 eingebaut, der von einem Heißgas, wie Rauchgas, durchströmt ist. In den Wärmetauscher kann auch ein Brenngas mit Luft oder einem anderen sauerstoffhältigem Gas oder Sauerstoff eingebracht werden, wodurch es zu einer Verbrennung des Brenngases und damit zu einer starken Anhebung der Temperatur des im Wirbelschichtreaktor 1 eingesetzten Erzes innerhalb von kurzer Zeit in erfindungsgemäßer Art und Weise kommt. Der Rekuperator 35 dient dann als Brennkammer für einen in ihm eingesetzten Brenner. Das hierbei entstehende Rauchgas kann zur Erztrocknung oder zur Vorwärmung des Reduktionsgases verwendet werden. Ein Teilstrom des aus dem Wirbelschichtreaktor 2 austretenden Reduktionsgases wird über die Zweigleitung 30 in die Topgas-Ableitung 8 eingeleitet.

Gemäß der in Fig. 8 dargestellten Ausführungsvariante wird Luft oder ein anderes sauerstoffhältiges Gas oder Sauerstoff dem System zugeführt, wodurch ebenfalls die Temperatur im Wirbelschichtreaktor 1 so weit angehoben werden kann, daß das Erz sich innerhalb von 5 Minuten von 400°C auf 580°C erhitzt. Die Zuführung des Sauerstoffes oder sauerstoffhältigen Gases kann in die Verbindungsleitung 19 (Stelle B), die den Wirbelschichtreaktor 2 mit dem Wirbelschichtreaktor 1 verbindet, erfolgen. Es ist aber auch denkbar, diese Medien direkt in den Wirbelschichtreaktor 2 und/oder Wirbelschichtreaktor 1 (Stellen A und/oder D) oder auch in die den Wirbelschichtreaktor 3 mit dem Wirbelschichtreaktor 2 verbindende Verbindungsleitung 19 (Stelle C) einströmen zu lassen. Es kommt hierdurch zu einer Teilverbrennung von Reduktionsgas und damit zu einer starken Erhöhung der Temperatur im Wirbelschichtreaktor 1 bzw. Wirbelschichtreaktor 2 oder in der Verbindungsleitung 19. Auch durch diese Maßnahmen gelingt es in relativ einfacher Art und Weise, den für die Magnetitbildung kritischen Temperaturbereich zwischen 400°C und 580°C, vorzugsweise den Bereich zwischen 350°C und 650°C, innerhalb der als kritisch erkannten Zeitspanne von 5 Minuten zu durchschreiten. Ein Teilstrom des aus dem Wirbelschichtreaktor 2 austretenden Reduktionsgases wird über die Zweigleitung 30 in die Topgas-Ableitung 8 eingeleitet.

Eine derartig schnelle Aufheizung des Eisenerzes im kritischen Temperaturbereich kann auch dadurch erzielt werden, daß in den ersten Wirbelschichtreaktor 1 ein bereits vorgewärmtes Feinerz - beispielsweise vorgewärmt auf eine Temperatur zwischen 250 und 400°C - durchgeführt wird.

Aus Fig. 9, dem Baur-Glaessner-Diagramm, ist zu erkennen, daß es bei einem Reduktionsprozeß ohne Beeinflussung des Temperaturniveaus im ersten Wirbelschichtreaktor zu einer Magnetitbildung kommt. Dieser Prozeß ist mit runden Punkten veranschaulicht. (Das Baur-Glaessner-Diagramm ist als thermodynamisches Diagramm zu verstehen und daher unabhängig von der Reaktionskinetik und somit auch von der Vorgeschichte der Reduktion:) Bei einer Temperaturerhöhung im Wirbelschichtreaktor 1 auf über 580°C - welcher Prozeß in Fig. 9 durch Quadrate veranschaulicht ist - wird eine Magnetitbildung nahezu zur Gänze vermieden. Eine Temperaturerniedrigung im Wirbelschichtreaktor 1 ist in Fig. 9 durch Dreiecke veranschaulicht. Da der kritische Temperaturbereich in nachfolgender Wirbelschichtzone, also im Wirbelschichtreaktor 2, sehr schnell durchschritten wird, hält sich die Magnetitbildung in Grenzen, und es kommt zu keiner Beeinträchtigung des Reduktionsprozesses in den Reduktionsstufen.

Aus Fig. 10, einem Diagramm,-das auf der Ordinate die Temperatur und auf der Abszisse die Zeit aufgetragen hat, ist in schematischer Darstellung der Temperaturverlauf für drei Varianten der Betriebsweise des Wirbelschichtreaktors 1 veranschaulicht. Gemäß Variante I, die durch die mit voller Linie ausgezogene Kurve veranschaulicht ist, wird im Wirbelschichtreaktor 1 eine Temperatur von knapp unter 400°C eingestellt. Es ist zu ersehen, daß der kritische Temperaturbereich zwischen 400 und 580°C, der durch ein Feld mit Schraffen in Fig. 10 angemerkt ist, nicht tangiert wird.

Bei einer Temperatur von knapp unter 400°C geht die Magnetitbildung nur so langsam vor sich, daß eine allfällige Magnetitschicht an den Erzkörnern keine die weitere Reduktion behindernde Schicht darstellt. Die weitere Reduktion ist durch den an den Kurvenzug I anschließenden Kurvenzug, der mit IV bezeichnet ist und die Aufheizung des eisenoxidhältigen Materials bzw. der Erzkörner im Wirbelschichtreaktor 2 veranschaulicht, dargestellt. Es ist zu ersehen, daß der kritische Temperaturbereich zwischen 400 und 580°C im Wirbelschichtreaktor 2 sehr schnell durchschritten wird, da in diesem Wirbelschichtreaktor 2 das Reduktionsgas sehr heiß und sehr reaktionsfreudig ist. Die Zeitdauer, in der sich Magnetit bilden kann, ist, obwohl die Magnetitbildung in diesem Temperaturbereich sehr schnell vor sich geht, zu kurz, um eine die Reduktion behindernde Schicht entstehen zu lassen.

Der Kurvenzug Variante II - mit strichlierter Linie veranschaulicht - gibt die Temperaturverhältnisse wieder, wenn im ersten Wirbelschichtreaktor 1 eine Temperatur von über 580°C eingestellt wird. Auch hier wird der kritische Temperaturbereich zwischen 400 und 580°C sehr schnell durchschritten und die Zeitspanne zur Bildung einer Magnetitschicht an den Erzkörnern ist zu gering, als daß hierdurch eine störende Behinderung der Reduktion bewirkt werden könnte.

Der Kurvenzug Variante III - mit strichpunktierter Linie veranschaulicht - gibt jene Aufheizung wieder, wenn im Wirbelschichtreaktor 1 eine Temperatur innerhalb des kritischen Bereiches, also zwischen 400 und 580°C, eingestellt wird. In diesem Fall ist es wichtig, daß die Aufheizung besonders schnell vor sich geht, um die Zeitdauer, die das eisenoxidhältige Material bzw. die Erzkörner in diesem Temperaturbereich verbringen, möglichst kurz zu halten. Wesentlich ist hierbei noch, daß unmittelbar nach Erreichen der für den Wirbelschichtreaktor 1 gewünschten Temperatur das Material aus dem Wirbelschichtreaktor 1 ausgebracht und in den Wirbelschichtreaktor 2 überführt wird. Ein Halten im kritischen Temperaturbereich soll auf jeden Fall vermieden werden, da, wie bereits erwähnt, in diesem kritischen Temperaturbereich die Magnetitbildung sehr schnell vor sich geht und sich an den Erzkörnern eine dementsprechend dicke Magnetitschicht ausbilden könnte.

Die Magnetitbildung ist in dem Diagramm Fig. 10 ebenfalls veranschaulicht, u.zw. durch das in diesem Diagramm mit vertikalen Schraffen versehene Feld, wobei in Ordinatenrichtung der steigende Magnetitanteil in Abhängigkeit von der Zeitdauer zu ersehen ist.

## Patentansprüche

1. Verfahren zur Direktreduktion von teilchenförmigem eisenoxidhältigem Material im Wirbelschichtverfahren, wobei Synthesegas, wie reformiertes Erdgas, als Reduktionsgas in mehrere für das Reduktionsgas in Serie hintereinander geschaltete Wirbelschichtzonen eingeleitet wird und im Gegenstrom zu dem teilchenförmigen eisenoxidhältigen Material von Wirbelschichtzone zu Wirbelschichtzone geführt wird, und wobei in der in Fließrichtung des eisenoxidhältigen Materials ersten Wirbelschichtzone eine Erhitzung des eisenoxidhältigen Materials und in der bzw. den weiteren Wirbelschichtzone(n) die Direktreduktion durchgeführt wird, **dadurch gekennzeichnet**,
• daß in der ersten Wirbelschichtzone eine Temperatur des eisenoxidhältigen Materials entweder unter 400°C, vorzugsweise unter 350°C,
• oder über 580°C, vorzugsweise bei etwa 650°C,
• oder eine Temperatur im Bereich von 400 bis 580°C eingestellt wird,
• wobei bei einer Temperatureinstellung auf unter 400°C der Temperaturbereich zwischen 400°C und 580°C in der in Fließrichtung des eisenoxidhältigen Materials der ersten Wirbelschichtzone nachgeordneten Wirbelschichtzone innerhalb einer Zeitspanne von 10 Minuten, vorzugsweise innerhalb von 5 Minuten, durchschritten wird, und
• wobei bei einer Temperatureinstellung auf über 580°C der Temperaturbereich zwischen 400°C und 580°C innerhalb einer Zeitspanne von maximal 10 Minuten, vorzugsweise 5 Minuten, durchschritten wird, und
• wobei weiters bei einer Temperatureinstellung im Bereich von 400°C bis 580°C das eisenoxidhältige Material in diesem Temperaturbereich maximal 10 Minuten, vorzugsweise 5 Minuten verweilt und unmittelbar nach Erreichen der gewünschten Temperatur in die nächstfolgende Wirbelschichtzone weitergeleitet wird.

2. Verfahren nach Anspruch 1, **dadurch gekennzeichnet, daß** in jedem Fall unmittelbar nach Erreichen der gewünschten Temperatur das eisenoxidhältige Material der nachgeordneten Wirbelschichtzone überführt wird.

3. Verfahren nach Anspruch 1 oder 2, **dadurch gekennzeichnet, daß** der Temperaturbereich zwischen 400°C und 580°C unter Vermeidung einer Haltezeit durchschritten wird und der durchschnittliche Temperaturgradient innerhalb des Bereiches zwischen 400°C und 580°C mindestens 20°C/min, vorzugsweise 40°C/min, beträgt.

4. Verfahren nach einem oder mehreren der Ansprüche 1 bis 3, **dadurch gekennzeichnet, daß** das der ersten Wirbelschichtzone zugeführte Reduktionsgas vor Einleiten in die erste Wirbelschichtzone einer Abkühlung unterzogen wird (Fig. 3).

5. Verfahren nach einem oder mehreren der Ansprüche 1 bis 4, **dadurch gekennzeichnet, daß** das aus der der ersten Wirbelschichtzone in Fließrichtung des eisenoxidhältigen Materials nachgeordneten Wirbelschichtzone austretende Reduktionsgas nur zum Teil in die erste Wirbelschichtzone eingeleitet wird und das aus der ersten Wirbelschichtzone austretende Reduktionsgas zumindest teilweise in die erste Wirbelschichtzone rezirkuliert wird (Fig. 4).

6. Verfahren nach einem oder mehreren der Ansprüche 1 bis 5, **dadurch gekennzeichnet, daß** das eisenoxidhältige Material und das Gas in der ersten Wirbelschichtzone indirekt gekühlt wird, vorzugsweise mittels Luft oder Wasser (Fig. 1).

7. Verfahren nach einem oder mehreren der Ansprüche 1 bis 6, **dadurch gekennzeichnet, daß** das eisenoxidhältige Material und das Gas in der ersten Wirbelschichtzone direkt gekühlt wird, vorzugsweise durch Eindüsen von Wasser und/oder Wasserdampf (Fig. 2).

8. Verfahren nach einem oder mehreren der Ansprüche 1 bis 3, **dadurch gekennzeichnet, daß** das der ersten Wirbelschichtzone zugeführte Reduktionsgas vor Einleiten in die erste Wirbelschichtzone als Gesamt- oder Teilstrom erhitzt wird, vorzugsweise indirekt mittels eines Rauchgases (Fig. 5).

9. Verfahren nach einem oder mehreren der Ansprüche 1 bis 3 und 8, **dadurch gekennzeichnet, daß** in die erste Wirbelschichtzone die Gesamtmenge oder nur eine Teilmenge des aus der der ersten Wirbelschichtzone in Fließrichtung des eisenoxidhältigen Materials nachgeordneten Wirbelschichtzone austretenden Reduktionsgases und zumindest eine Teilmenge eines frischen, vorzugsweise unverbrauchten, Reduktionsgases zugeführt wird (Fig. 6).

10. Verfahren nach einem oder mehreren der Ansprüche 1 bis 3 und 8 und 9, **dadurch gekennzeichnet, daß** dem der ersten und/oder nachfolgenden Wirbelschichtzone zugeführten Reduktionsgas vor Eintritt desselben in die erste Wirbelschichtzone Sauerstoff oder ein sauerstoffhältiges Gas unter Bewirken einer Teilverbrennung des Reduktionsgases zugeführt wird (Fig. 8).

11. Verfahren nach einem oder mehreren der Ansprüche 1 bis 3 und 8 bis 10, **dadurch gekennzeichnet, daß** in die erste und/oder nachfolgende Wirbelschichtzone Sauerstoff oder ein sauerstoffhältiges Gas unter Bewirken einer Teilverbrennung des Reduktionsgases eingeleitet wird (Fig. 8).

12. Verfahren nach einem oder mehreren der Ansprüche 1 bis 3 und 8 bis 11, **dadurch gekennzeichnet, daß** das in die erste Wirbelschichtzone eingesetzte eisenoxidhältige Material im vorgewärmten Zustand, vorzugsweise im hochvorgewärmten Zustand, eingesetzt wird, insbesondere mit einer Temperatur über 250°C.

13. Verfahren nach einem oder mehreren der Ansprüche 1 bis 3 und 8 bis 12, **dadurch gekennzeichnet, daß** das eisenoxidhältige Material und das Gas in der ersten Wirbelschichtzone indirekt erhitzt wird, vorzugsweise mittels eines Heißgases oder mittels eines Rauchgases oder durch Verbrennen eines Brenngases (Fig. 7).

14. Verfahren nach einem oder mehreren der Ansprüche 1 bis 3, **dadurch gekennzeichnet, daß** das eisenoxidhältige Material in der ersten Wirbelschichtzone kürzer verweilt als in den in Fließrichtung des eisenoxidhältigen Materials nachgeordneten Wirbelschichtzonen.

15. Anlage zur Durchführung eines Verfahrens nach Anspruch 6 oder 13, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** im in Fließrichtung des eisenoxidhältigen Materials ersten Wirbelschichtreaktor (1) ein Rekuperator (25, 35) vorgesehen ist (Fig. 1, 7).

16. Anlage nach Anspruch 15, **dadurch gekennzeichnet, daß** der Rekuperator (25) an eine Wasser- oder Wasserdampfleitung angeschlossen ist (Fig. 1).

17. Anlage nach Anspruch 15, **dadurch gekennzeichnet, daß** der Rekuperator an eine Heißgasleitung (35) angeschlossen ist (Fig. 7).

18. Anlage nach Anspruch 15, **dadurch gekennzeichnet, daß** der Rekuperator an eine Rauchgasleitung angeschlossen ist (Fig. 7).

19. Anlage zur Durchführung des Verfahrens nach Anspruch 14, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** in dem in Fließrichtung des eisenoxidhältigen Materials ersten Wirbelschichtreaktor (1) ein gegenüber der Wirbelschichtzone in diesem Wirbelschichtreaktor abgekapselter Brenner eingebaut ist (Fig, 7).

20. Anlage zur Durchführung des Verfahrens nach Anspruch 4, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen(6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** in der Verbindungsleitung (19) zwischen dem in Fließrichtung des eisenoxidhältigen Materials ersten Wirbelschichtreaktör (1) und zweiten Wirbelschichtreaktor (2) eine Kühleinrichtung (29) vorgesehen ist, vorzugsweise ein Rekuperator, der an ein Kühlmedium angeschlossen ist, vorzugsweise Luft oder Wasser (Fig. 3).

21. Anlage zur Durchführung des Verfahrens nach Anspruch 5, mit mehreren in Serie hintereinandergeschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** von einer aus dem in Fließrichtung des eisenoxidhältigen Materials ersten Wirbelschichtreaktor (1) Topgas abführenden Leitung (8) eine Zweigleitung (31) abzweigt, die mit diesem Wirbelschichtreaktor (1) leitungsmäßig verbunden ist, vorzugsweise in die in diesen Wirbelschichtreaktor mündende Verbindungsleitung (19) mündet (Fig. 4).

22. Anlage nach Anspruch 21, **dadurch gekennzeichnet, daß** von der den in Fließrichtung des eisenoxidhältigen Materials ersten Wirbelschichtreaktor (1) mit dem diesem nachgeordneten Wirbelschichtreaktor (2) verbindenden Verbindungsleitung (19) eine Zweigleitung (30) in die Topgas-Ableitung (8) mündet (Fig. 4).

23. Anlage zur Durchführung des Verfahrens nach Anspruch 7, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** eine ein Kühlmittel zuführende Leitung (27, 28) entweder direkt in den in Fließrichtung des eisenoxidhältigen Materials ersten Wirbelschichtreaktor (1) mündet oder in die den ersten Wirbelschichtreaktor mit dem nachfolgenden Wirbelschichtreaktor verbindende Verbindungsleitung (19) mündet (Fig. 2).

24. Anlage zur Durchführung des Verfahrens nach Anspruch 8, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** in der Verbindungsleitung (19) zwischen dem in Fließrichtung des eisenoxidhältigen Materials ersten Wirbelschichtreaktor (1) und zweiten Wirbelschichtreaktor (2) eine Heizeinrichtung (32), vorzugsweise ein an Rauchgas oder an Heizgas angeschlossener Rekuperator vorgesehen ist (Fig. 5).

25. Anlage nach Anspruch 24, **dadurch gekennzeichnet, daß** von der den ersten Wirbelschichtreaktor (1) mit dem nachgeordneten Wirbelschichtreaktor (2) verbindenden Verbindungsleitung (19) eine Zweigleitung (30) abzweigt, die in eine Abgas aus dem ersten Wirbelschichtreaktor (1) ableitende Topgas-Ableitung (8) mündet (Fig. 5).

26. Anlage zur Durchführung des Verfahrens nach Anspruch 9, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** in den in Fließrichtung des eisenoxidhältigen Materials ersten Wirbelschichtreaktor (1) zusätzlich zur Verbindungsleitung (19) eine frisches Reduktionsgas zuführende Leitung direkt oder indirekt über die Verbindungsleitung (19) mündet (Fig. 6).

27. Anlage nach Anspruch 26, **dadurch gekennzeichnet, daß** von der den ersten Wirbelschichtreaktor (1) mit dem nachgeordneten Wirbelschichtreaktor (2) verbindenden Verbindungsleitung (19) eine Zweigleitung (30) abzweigt, die in eine Abgas aus dem ersten Wirbelschichtreaktor ableitende Topgas-Ableitung (8) mündet (Fig. 6).

28. Anlage zur Durchführung des Verfahrens nach Anspruch 10, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** in eine der Verbindungsleitungen (19) und/oder in den in Fließrichtung des eisenoxidhältigen Materials zweiten Wirbelschichtreaktor (2) eine ein sauerstoffhältiges Gas oder Sauerstoff zuführende Leitung mündet (bei B, C, D) (Fig. 8).

29. Anlage zur Durchführung des Verfahrens nach Anspruch 11, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** in den in Fließrichtung des eisenoxidhältigen Materials ersten Wirbelschichtreaktor (1) eine ein sauerstoffhältiges Gas oder Sauerstoff zuführende Leitung mündet (bei A) (Fig. 8).

30. Anlage zur Durchführung des Verfahrens nach Anspruch 12, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** dem in Fließrichtung des eisenoxidhältigen Materials ersten Wirbelschichtreaktor (1) eine Vorwärmeinrichtung zur Vorwärmung des eisenoxidhältigen Material vorgeordnet ist.

31. Anlage zur Durchführung des Verfahrens nach Anspruch 12, mit mehreren in Serie hintereinander geschalteten Wirbelschichtreaktoren (1 bis 4) zur Aufnahme eisenoxidhältigen Materials, wobei das eisenoxidhältige Material von Wirbelschichtreaktor (1) zu Wirbelschichtreaktor (2 bis 4) über Förderleitungen (6) in einer Richtung und das Reduktionsgas von Wirbelschichtreaktor (4) zu Wirbelschichtreaktor (3 bis 1) über Verbindungsleitungen (19) in die entgegengesetzte Richtung geführt ist, **dadurch gekennzeichnet, daß** der in Fließrichtung des eisenoxidhältigen Materials erste Wirbelschichtreaktor (1) ein kleineres Innenvolumen aufweist als die in Fließrichtung des eisenoxidhältigen Materials nachgeordneten Wirbelschichtreaktoren (2 bis 4).

32. Anlage nach einem oder mehreren der Ansprüche 28 bis 31, **dadurch gekennzeichnet, daß** von der den ersten Wirbelschichtreaktor (1) mit dem nachgeordneten Wirbelschichtreaktor (2) verbindenden Verbindungsleitung (19) eine Zweigleitung (30) abzweigt, die in eine Abgas aus dem ersten Wirbelschichtreaktor ableitende Topgas-Ableitung (8) mündet (Fig. 4 bis 8).

## Claims

1. A process for the direct reduction of particulate iron-oxide-containing material by fluidization, wherein synthesis gas such as reformed natural gas is introduced as a reducing gas into several fluidized bed zones consecutively arranged in series for the reducing gas and is conducted from fluidized bed zone to fluidized bed zone in counterflow to the particulate iron-oxide containing material, and wherein heating of the iron-oxide-containing material is effected in the fluidized bed zone arranged first in the flow direction of the iron-oxide-containing material and the direct reduction is carried out in the further fluidized bed zone(s), **characterized**
• in that a temperature of the iron-oxide-containing material of either below 400°C, preferably below 350°C,
• or above 580°C, preferably about 650°C,
• or a temperature ranging from 400 to 580°C is adjusted in the first fluidized bed zone,
• wherein, at a temperature adjustment to below 400°C, the temperature range between 400°C and 580°C in the fluidized bed zone following the first fluidized bed zone in the flow direction of the iron-oxide-containing material is passed through within a period of 10 minutes, preferably within 5 minutes, and
• wherein, at a temperature adjustment to above 580°C, the temperature range between 400°C and 580°C is passed through within a period of maximally 10 minutes, preferably 5 minutes, and
• wherein, furthermore, at a temperature adjustment in the range of from 400°C to 580°C, the iron-oxide-containing material remains within that temperature range for a maximum of 10 minutes, preferably 5 minutes, and is passed on into the fluidized bed zone following next immediately after having reached the desired temperature.

2. A process according to claim 1, **characterized in that** the iron-oxide-containing material in any event is transferred to the consecutively arranged fluidized bed zone immediately after having reached the desired temperature.

3. A process according to claim 1 or 2, **characterized in that** the temperature range between 400°C and 580°C is passed through while avoiding a residence time, the average temperature gradient within the range between 400°C and 580°C amounting to at least 20°C/min, preferably 40°C/min.

4. A process according to one or several of claims 1 to 3, **characterized in that** the reducing gas fed to the first fluidized bed zone is subjected to cooling before being introduced into the first fluidized bed zone (Fig. 3).

5. A process according to one or several of claims 1 to 4, **characterized in that** the reducing gas emerging from the fluidized bed zone arranged to follow the first fluidized bed zone in the flow direction of the iron-oxide-containing material is introduced into the first fluidized bed zone only partially and the reducing gas emerging from the first fluidized bed zone is recirculated into the first fluidized bed zone at least partially (Fig. 4).

6. A process according to one or several of claims 1 to 5, **characterized in that** the iron-oxide-containing material and the gas are indirectly cooled in the first fluidized bed zone, preferably by means of air or water (Fig. 1).

7. A process according to one or several of claims 1 to 6, **characterized in that** the iron-oxide-containing material and the gas are directly cooled in the first fluidized bed zone, preferably by nozzling in water and/or water vapor (Fig. 2).

8. A process according to one or several of claims 1 to 3, **characterized in that** the reducing gas fed to the first fluidized bed zone is heated as a total or partial stream, preferably indirectly by means of a smoke gas, before being introduced into the first fluidized bed zone (Fig. 5).

9. A process according to one or several of claims 1 to 3 and 8, **characterized in that** the total amount, or only a partial amount, of the reducing gas emerging from the fluidized bed zone arranged to follow the first fluidized bed zone in the flow direction of the iron-oxide-containing material and at least a partial amount of a fresh, preferably unused, reducing gas are fed into the first fluidized bed zone (Fig. 6).

10. A process according to one or several of claims 1 to 3 and 8 and 9, **characterized in that** oxygen or an oxygen-containing gas is supplied to the reducing gas fed to the first and/or consecutively arranged fluidized bed zone while effecting a partial combustion of the reducing gas, prior to its entry into the first fluidized bed zone (Fig. 8).

11. A process according to one or several of claims 1 to 3 and 8 to 10, **characterized in that** oxygen or an oxygen-containing gas is introduced into the first and/or consecutively arranged fluidized bed zone while effecting a partial combustion of the reducing gas (Fig. 8).

12. A process according to one or several of claims 1 to 3 and 8 to 11, **characterized in that** the iron-oxide-containing material charged into the first fluidized bed zone is charged in the preheated state, preferably in the highly preheated state, in particular at a temperature above 250°C.

13. A process according to one or several of claims 1 to 3 and 8 to 12, **characterized in that** the iron-oxide-containing material and the gas are indirectly heated in the first fluidized bed zone, preferably by means of a hot gas or by means of a smoke gas or by burning a combustible gas (Fig. 7).

14. A process according to one or several of claims 1 to 3, **characterized in that** the iron-oxide-containing material has a shorter residence time in the first fluidized bed zone than in the fluidized bed zones consecutively arranged in the flow direction of the iron-oxide-containing material.

15. A plant for carrying out a process according to claim 6 or 13, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a recuperator (25, 35) is provided in the fluidized bed reactor (1) arranged first in the flow direction of the iron-oxide-containing material (Figs. 1, 7).

16. A plant according to claim 15, **characterized in that** the recuperator (25) is connected to a water or water vapor duct (Fig. 1).

17. A plant according to claim 15, **characterized in that** the recuperator is connected to a hot gas duct (35) (Fig. 7).

18. A plant according to claim 15, **characterized in that** the recuperator is connected to a smoke gas duct (Fig. 7).

19. A plant for carrying out the process according to claim 14, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a burner is installed in the fluidized bed reactor (1) arranged first in the flow direction of the iron-oxide-containing material, said burner being encapsulated relative to the fluidized bed zone of that fluidized bed reactor (Fig. 7).

20. A plant for carrying out the process according to claim 4, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a cooling means (29), preferably a recuperator connected to a cooling medium, preferably air or water, is provided in the connecting duct (19) between the fluidized bed reactors arranged first (1) and second (2) in the flow direction of the iron-oxide-containing material (Fig. 3).

21. A plant for carrying out the process according to claim 5, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a branch duct (31) branches off a duct (8) carrying off top gas from the fluidized bed reactor (1) arranged first in the flow direction of the iron-oxide-containing material, which branch duct is flow-connected with said fluidized bed reactor (1), preferably running into the connecting duct (19) opening into said fluidized bed reactor (Fig. 4).

22. A plant according to claim 21, **characterized in that** a branch duct (30) runs into the top gas discharge duct (8) from the connecting duct (19) connecting the fluidized bed reactor (1) arranged first in the flow direction of the iron-oxide-containing material with the consecutively arranged fluidized bed reactor (2) (Fig. 4).

23. A plant for carrying out the process according to claim 7, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a duct (27, 28) supplying a coolant either opens directly into the fluidized bed reactor (1) arranged first in the flow direction of the iron-oxide-containing material or runs into the connecting duct (19) connecting the first fluidized bed reactor with the consecutively arranged fluidized bed reactor (Fig. 2).

24. A plant for carrying out the process according to claim 8, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a heating means (32), preferably a recuperator connected to smoke gas or to heating gas, is provided in the connecting duct (19) between the fluidized bed reactor (1) arranged first in the flow direction of the iron-oxide-containing material and the second fluidized bed reactor (2) (Fig. 5).

25. A plant according to claim 24, **characterized in that** a branch duct (30) branches off the connecting duct (19) connecting the first fluidized bed reactor (1) with the consecutively arranged fluidized bed reactor (2), which branch duct runs into a top gas discharge duct (8) carrying off offgas from the first fluidized bed reactor (1) (Fig. 5).

26. A plant for carrying out the process according to claim 9, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a duct supplying fresh reducing gas in addition to the connecting duct (19) runs directly, or indirectly via the connecting duct (19), into the fluidized bed reactor (1) arranged first in the flow direction of the iron-oxide-containing material (Fig. 6).

27. A plant according to claim 26, **characterized in that** a branch duct (30) branches off the connecting duct (19) connecting the first fluidized bed reactor (1) with the consecutively arranged fluidized bed reactor (2), which branch duct runs into a top gas discharge duct (8) carrying off offgas from the first fluidized bed reactor (Fig. 6).

28. A plant for carrying out the process according to claim 10, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a duct supplying an oxygen-containing gas or oxygen runs (at B, C, D) into one of the connecting ducts (19) and/or into the fluidized bed reactor (2) arranged second in the flow direction of the iron-oxide-containing material (Fig. 8).

29. A plant for carrying out the process according to claim 11, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a duct supplying an oxygen-containing gas or oxygen runs (at A) into the fluidized bed reactor (1) arranged first in the flow direction of the iron-oxide-containing material (Fig. 8).

30. A plant for carrying out the process according to claim 12, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** a preheating means for preheating the iron-oxide-containing material precedes the fluidized bed reactor (1) arranged first in the flow direction of the iron-oxide-containing material.

31. A plant for carrying out the process according to claim 12, comprising several fluidized bed reactors (1 to 4) consecutively arranged in series for receiving an iron-oxide-containing material, with the iron-oxide-containing material being conducted from fluidized bed reactor (1) to fluidized bed reactor (2 to 4) via conveying ducts (6) in one direction and the reducing gas being conducted from fluidized bed reactor (4) to fluidized bed reactor (3 to 1) via connecting ducts (19) in the opposite direction, **characterized in that** the fluidized bed reactor (1) arranged first in the flow direction of the iron-oxide-containing material has a smaller internal volume than the fluidized bed reactors (2 to 4) consecutively arranged in the flow direction of the iron-oxide-containing material.

32. A plant according to one or several of claims 28 to 31, **characterized in that** a branch duct (30) branches off the connecting duct (19) connecting the first fluidized bed reactor (1) with the consecutively arranged fluidized bed reactor (2), which branch duct runs into a top gas discharge duct (8) carrying off offgas from the first fluidized bed reactor (Figs. 4 to 8).

## Revendications

1. Procédé pour la réduction directe d'un matériau sous forme particulaire contenant de l'oxyde de fer selon le procédé à lit fluidisé, selon lequel on introduit un gaz de synthèse, tel que du gaz naturel reformé, en tant que gaz réducteur dans plusieurs zones du lit fluidisé, disposées les unes derrière les autres en série pour le gaz réducteur, et on le dirige à contre-courant du matériau sous forme particulaire constitué d'oxyde de fer, d'une zone du lit fluidisé à la suivante, et selon lequel dans la première zone du lit fluidisé, dans la direction de circulation du matériau contenant de l'oxyde de fer, et on effectue la réduction directe dans la ou les zones du lit fluidisé, **caractérisé en ce**
- que dans la première zone du lit fluidisé, on règle une température du matériau contenant de l'oxyde de fer soit à une valeur inférieure à 400°C, et de préférence inférieure à 350°C,
- soit à une valeur supérieure à 580°C, de préférence à 650°C,
- soit une température dans la gamme de 400 à 580°C, et
- selon lequel dans le cas d'un réglage de la température au-dessous de 400°C, la gamme de températures entre 400°C et 580°C dans la zone du lit fluidisé, située en aval de la première zone du lit fluidisé dans la direction de circulation du matériau contenant de l'oxyde de fer, est parcourue en un intervalle de temps de 10 minutes, de préférence un intervalle de temps de 5 minutes, et
- selon lequel dans le cas d'un réglage de la température à une valeur supérieure à 580°C, la gamme de températures entre 400°C et 580°C est parcourue en un intervalle de temps égal au maximum à 10 minutes et de préférence à 5 minutes, et
- en outre dans le cas d'un réglage de la température dans la gamme de 400°C à 580°C, le matériau contenant de l'oxyde de fer séjourne dans cette gamme de températures au maximum pendant 10 minutes, de préférence 5 minutes, et, une fois atteinte la température désirée, est transféré dans la zone immédiatement suivante du lit fluidisé.

2. Procédé selon la revendication 1, **caractérisé en ce que** dans tous les cas, juste après que la température désirée est atteinte, le matériau contenant de l'oxyde de fer est transféré à la zone aval du lit fluidisé.

3. Procédé selon la revendication 1 ou 2, **caractérisé en ce que** la gamme de températures entre 400°C et 580°C est parcourue tout en évitant un temps d'arrêt et que le gradient moyen de température est égal à au moins 20°C/mn, de préférence à 40°C/mn, dans la gamme comprise entre 400°C et 580°C.

4. Procédé selon une ou plusieurs des revendications 1 à 3, **caractérisé en ce que** le gaz réducteur envoyé à la première zone du lit fluidisé est soumis à un refroidissement, avant de pénétrer dans la première zone du lit fluidisé (figure 3).

5. Procédé selon une ou plusieurs des revendications 1 à 4, **caractérisé en ce que** le gaz réducteur, qui sort de la zone du lit fluidisé située en aval de la première zone du lit fluidisé dans la direction de circulation du matériau contenant de l'oxyde de fer, est introduit uniquement partiellement dans la première zone du lit fluidisé, et le gaz réducteur, qui sort de la première zone du lit fluidisé, est renvoyé par recirculation, au moins en partie, dans la première zone du lit fluidisé (figure 4).

6. Procédé selon une ou plusieurs des revendications 1 à 5, **caractérisé en ce que** le matériau contenant de l'oxyde de fer et le gaz dans la première zone du lit fluidisé sont refroidis de façon indirecte, de préférence à l'aide d'air ou d'eau (figure 1).

7. Procédé selon une ou plusieurs des revendications 1 à 6, **caractérisé en ce que** le matériau contenant de l'oxyde de fer et le gaz dans la première zone du lit fluidisé sont refroidis directement, de préférence par introduction d'eau et/ou de vapeur d'eau par des buses (figure 2).

8. Procédé selon une ou plusieurs des revendications 1 à 3, **caractérisé en ce que** le gaz réducteur envoyé à la première zone du lit fluidisé est chauffé avant son introduction dans la première zone du lit fluidisé, en tant que courant total ou partiel, de préférence indirectement au moyen d'un gaz de fumée (figure 5).

9. Procédé selon une ou plusieurs des revendications 1 à 3 et 8, **caractérisé en ce que** la quantité totale ou seulement une quantité partielle du gaz réducteur qui sort de la zone du lit fluidisé qui est située en aval de la première zone du lit fluidisé dans la direction de circulation du matériau contenant de l'oxyde de fer et au moins une quantité partielle d'un gaz réducteur frais, de préférence non utilisé est envoyé dans la première zone du lit fluidisé (figure 6).

10. Procédé selon une ou plusieurs des revendications 1 à 3 et 8 et 9, **caractérisé en ce que** de l'oxygène ou un gaz contenant de l'oxygène est introduit, pour réaliser une combustion partielle du gaz réducteur, dans le gaz réducteur qui est envoyé à la première zone et/ou à la zone suivante du lit fluidisé, avant son introduction dans la première zone du lit fluidisé (figure 8).

11. Procédé selon une ou plusieurs des revendications 1 à 3 et 8 à 10, **caractérisé en ce qu'**on introduit de l'oxygène et/ou un gaz contenant de l'oxygène en provoquant une combustion partielle du gaz réducteur, dans la première zone et/ou dans la zone suivante du lit fluidisé (figure 8).

12. Procédé selon une ou plusieurs des revendications 1 à 3 et 8 à 11, **caractérisé en ce qu'**on utilise le matériau contenant de l'oxyde de fer, qui est utilisé dans la première zone du lit fluidisé, à l'état préchauffé, de préférence à l'état fortement préchauffé, notamment à une température dépassant 250°C.

13. Procédé selon une ou plusieurs des revendications 1 à 3 et 8 à 12, **caractérisé en ce que** le matériau contenant de l'oxyde de fer et le gaz sont chauffés de façon indirecte dans la première zone du lit fluidisé, de préférence à l'aide d'un gaz chaud ou à l'aide d'un gaz de fumée ou bien par combustion d'un gaz de combustion (figure 7).

14. Procédé selon une ou plusieurs des revendications 1 à 3, **caractérisé en ce que** le matériau contenant de l'oxyde de fer situé dans la première zone du lit fluidisé séjourne plus brièvement dans la première zone du lit fluidisé que dans les zones du lit fluidisé qui sont situées en aval dans la direction de circulation du matériau contenant de l'oxyde de fer.

15. Installation pour la mise en oeuvre d'un procédé selon la revendication 6 ou 13, comportant plusieurs réacteurs à lit fluidisé (1 à 4) branchés les uns derrières les autre en série pour recevoir le matériau contenant de l'oxyde de fer, le matériau contenant de l'oxyde de fer étant guidé depuis le réacteur à lit fluidisé (1) au réacteur à lit fluidisé (2 à 4) par l'intermédiaire de canalisations de convoyage (6) dans une direction et le gaz réducteur est guidé depuis le réacteur (4) à lit fluidisé au réacteur (3 à 1) à lit fluidisé par l'intermédiaire de canalisations de liaison (19), dans la direction opposée, **caractérisée en ce qu'**un récupérateur (25, 35) est prévu dans le premier réacteur à lit fluidisé (1) dans la direction de circulation du matériau contenant de l'oxyde de fer (figure 1.7).

16. Installation selon la revendication 15, **caractérisée en ce que** le récupérateur (25) est raccordé à une canalisation d'eau ou de vapeur d'eau (figure 1).

17. Installation selon la revendication 15, **caractérisée en ce que** le récupérateur est raccordé à une canalisation de gaz chaud (35) (figure 7).

18. Installation selon la revendication 15, **caractérisée en ce que** le récupérateur est raccordé à une canalisation de gaz de fumée (figure 7).

19. Installation pour la mise en oeuvre du procédé selon la revendication 14, comportant plusieurs réacteurs à lit fluidisé (1 à 4) branchés en série les uns derrière les autres et servant à recevoir un matériau contenant de l'oxyde de fer, et dans lequel le matériau contenant de l'oxyde de fer est envoyé du réacteur à lit fluidisé (1) au réacteur à lit fluidisé (2 à 4) par l'intermédiaire de canalisations de convoyage (6) dans une direction et le gaz réducteur est envoyé du réacteur à lit fluidisé (4) au réacteur à lit fluidisé (1 à 3) par l'intermédiaire de canalisations de liaison (19) dans la direction opposée, **caractérisée en ce que** dans le premier réacteur à lit fluidisé (1), dans la direction de circulation du matériau contenant de l'oxyde de fer, est monté un brûleur encapsulé par rapport à la zone du lit fluidisé, dans ce réacteur à lit fluidisé (figure 7).

20. Installation pour la mise en oeuvre du procédé selon la revendication 4, comportant plusieurs réacteurs à lit fluidisé (1 à 4) branchés les uns derrière les autres en série servant à loger un matériau contenant de l'oxyde de fer, et dans lequel le matériau contenant de l'oxyde de fer est envoyé d'un réacteur à lit fluidisé (1) à un réacteur à lit fluidisé (2 à 4) en passant par les canalisations de convoyage (6) dans une direction et le gaz réducteur est transféré du réacteur à lit fluidisé (4) au réacteur à lit fluidisé (3 à 1) dans la direction opposée par l'intermédiaire de canalisations de liaison (19), **caractérisée en ce que** dans la canalisation de liaison (19) entre le premier réacteur à lit fluidisé (1), dans la direction de circulation du matériau contenant de l'oxyde de fer, et le second réacteur à lit fluidisé (2) est prévu un dispositif de refroidissement (29), de préférence un récupérateur, qui est raccordé à un milieu de refroidissement, de préférence de l'air ou de l'eau (figure 3).

21. Installation pour la mise en oeuvre du procédé selon la revendication 5, comportant plusieurs réacteurs à lit fluidisé (1 à 4) branchés les uns derrière les autres en série servant à loger un matériau contenant de l'oxyde de fer, et dans lequel le matériau contenant de l'oxyde de fer est envoyé d'un réacteur à lit fluidisé (1) à un réacteur à lit fluidisé (2 à 4) en passant par les canalisations de convoyage (6) dans une direction et le gaz réducteur est transféré du réacteur à lit fluidisé (4) au réacteur à lit fluidisé (3 à 1) dans la direction opposée par l'intermédiaire de canalisations de liaison (19), **caractérisée en ce qu'**à partir d'une canalisation (8) qui évacue le gaz dégagé à la partie supérieure à partir du premier réacteur à lit fluidisé (1) dans la direction de circulation du matériau contenant de l'oxyde de fer, s'étend en dérivation une canalisation de dérivation (31), qui est reliée à ce réacteur à lit fluidisé (1) et débouche de préférence dans la canalisation de liaison (19) qui débouche dans ce réacteur à lit fluidisé (figure 4).

22. Installation selon la revendication 21, **caractérisé en ce qu'**à partir de la canalisation de liaison (19) reliant le premier réacteur à lit fluidisé (1), dans la direction de circulation du matériau contenant de l'oxyde de fer, au réacteur à lit fluidisé (2) situé en aval du premier réacteur, une canalisation de dérivation (30) débouche dans la canalisation d'évacuation (8) du gaz délivré en partie haute (figure 4).

23. Installation pour la mise en oeuvre du procédé selon la revendication 5, comportant plusieurs réacteurs à lit fluidisé (1 à 4) branchés les uns derrière les autres en série servant à loger un matériau contenant de l'oxyde de fer, et dans lequel le matériau contenant de l'oxyde de fer est envoyé d'un réacteur à lit fluidisé (1) à un réacteur à lit fluidisé (2 à 4) en passant par les canalisations de convoyage (6) dans une direction et le gaz réducteur est transféré du réacteur à lit fluidisé (4) au réacteur à lit fluidisé (3 à 1) dans la direction opposée par l'intermédiaire de canalisations de liaison (19), **caractérisée en ce qu'**une canalisation (27, 28) amenant un milieu de refroidissement, débouche directement dans le premier réacteur à lit fluidisé (1), dans la direction de circulation du matériau contenant de l'oxyde de fer, ou débouche dans la canalisation de liaison (19), qui relie le premier réacteur à lit fluidisé au réacteur à lit fluidisé installé en aval (figure 2).

24. Installation pour la mise en oeuvre du procédé selon la revendication 5, comportant plusieurs réacteurs à lit fluidisé (1 à 4) branchés les uns derrière les autres en série servant à loger un matériau contenant de l'oxyde de fer, et dans lequel le matériau contenant de l'oxyde de fer est envoyé d'un réacteur à lit fluidisé (1) à un réacteur à lit fluidisé (2 à 4) en passant par les canalisations de convoyage (6) dans une direction et le gaz réducteur est transféré du réacteur à lit fluidisé (4) au réacteur à lit fluidisé (3 à 1) dans la direction opposée par l'intermédiaire de canalisations de liaison (19), **caractérisée en ce qu'**un dispositif de chauffage (32), de préférence un récupérateur raccordé au gaz de fumée ou au gaz chaud, est prévu dans la canalisation de liaison (19) qui s'étend entre le premier réacteur à lit fluidisé (1), dans la direction de circulation du matériau contenant de l'oxyde de fer, et le second réacteur à lit fluidisé (2) (figure 5).

25. Installation selon la revendication 24, **caractérisée en ce qu'**à partir de la canalisation de liaison (19) qui relie le premier réacteur à lit fluidisé (1) au réacteur à lit fluidisé (2) installé en aval, s'étend en dérivation une canalisation de dérivation (30), qui débouche dans une canalisation (8) d'évacuation du gaz produit au niveau haut, qui évacue des gaz d'échappement provenant du premier réacteur à couche fluidisé (1).

26. Installation pour la mise en oeuvre du procédé selon la revendication 5, comportant plusieurs réacteurs à lit fluidisé (1 à 4) branchés les uns derrière les autres en série servant à loger un matériau contenant de l'oxyde de fer, et dans lequel le matériau contenant de l'oxyde de fer est envoyé d'un réacteur à lit fluidisé (1) à un réacteur à lit fluidisé (2 à 4) en passant par les canalisations de convoyage (6) dans une direction et le gaz réducteur est transféré du réacteur à lit fluidisé (4) au réacteur à lit fluidisé (3 à 1) dans la direction opposée par l'intermédiaire de canalisations de liaison (19), **caractérisée en ce qu'**une canalisation amenant un gaz réducteur frais débouche directement ou indirectement par l'intermédiaire de la canalisation de liaison (19), dans cette canalisation de liaison (19), dans le premier réacteur à lit fluidisé (1), dans la direction de circulation du matériau contenant de l'oxyde de fer (figure 6).

27. Installation selon la revendication 26, **caractérisée en ce qu'**à partir de la canalisation de liaison (19), qui relie le premier réacteur à lit fluidisé (1) au réacteur à lit fluidisé (2) installé en aval, s'étend en dérivation une canalisation de dérivation (30), qui débouche dans une canalisation (8) d'évacuation du gaz produit au niveau haut, qui évacue des gaz d'échappement provenant du premier réacteur à lit fluidisé (1) (figure 6).

28. Installation pour la mise en oeuvre du procédé selon la revendication 5, comportant plusieurs réacteurs à lit fluidisé (1 à 4) branchés les uns derrière les autres en série servant à loger un matériau contenant de l'oxyde de fer, et dans lequel le matériau contenant de l'oxyde de fer est envoyé d'un réacteur à lit fluidisé (1) à un réacteur à lit fluidisé (2 à 4) en passant par les canalisations de convoyage (6) dans une direction et le gaz réducteur est transféré du réacteur à lit fluidisé (4) au réacteur à lit fluidisé (3 à 1) dans la direction opposée par l'intermédiaire de canalisations de liaison (19), **caractérisée en ce qu'**une canalisation amenant du gaz contenant de l'oxygène débouche (en B, C, D) dans l'une des canalisations de liaison (19) et/ou dans le second réacteur à lit fluidisé (2), dans la direction de circulation du matériau contenant de l'oxyde de fer (figure 8).

29. Installation pour la mise en oeuvre du procédé selon la revendication 11, comportant plusieurs réacteurs à lit fluidisé (1 à 4) branchés les uns derrière les autres en série servant à loger un matériau contenant de l'oxyde de fer, et dans lequel le matériau contenant de l'oxyde de fer est envoyé d'un réacteur à lit fluidisé (1) à un réacteur à lit fluidisé (2 à 4) en passant par les canalisations de convoyage (6) dans une direction et le gaz réducteur est transféré du réacteur à lit fluidisé (4) au réacteur à lit fluidisé (3 à 1) dans la direction opposée par l'intermédiaire de canalisations de liaison (19), **caractérisée en ce qu'**une canalisation amenant du gaz contenant de l'oxygène ou de l'oxygène débouche (en A) dans le premier réacteur à lit fluidisé (1), dans la direction de circulation du matériau contenant de l'oxyde de fer (figure 8).

30. Installation pour la mise en oeuvre du procédé selon la revendication 12, comportant plusieurs réacteurs à lit fluidisé (1 à 4) branchés les uns derrière les autres en série servant à loger un matériau contenant de l'oxyde de fer, et dans lequel le matériau contenant de l'oxyde de fer est envoyé d'un réacteur à lit fluidisé (1) à un réacteur à lit fluidisé (2 à 4) en passant par les canalisations de convoyage (6) dans une direction et le gaz réducteur est transféré du réacteur à lit fluidisé (4) au réacteur à lit fluidisé (3 à 1) dans la direction opposée par l'intermédiaire de canalisations de liaison (19), **caractérisée en ce qu'**un dispositif de préchauffage servant à préchauffer le matériau contenant de l'oxyde de fer est disposé en amont du premier réacteur à lit fluidisé (1) dans la direction de circulation du matériau contenant de l'oxyde de fer.

31. Installation pour la mise en oeuvre du procédé selon la revendication 12, comportant plusieurs réacteurs à lit fluidisé (1 à 4) branchés les uns derrière les autres en série servant à loger un matériau contenant de l'oxyde de fer, et dans lequel le matériau contenant de l'oxyde de fer est envoyé d'un réacteur à lit fluidisé (1) à un réacteur à lit fluidisé (2 à 4) en passant par les canalisations de convoyage (6) dans une direction et le gaz réducteur est transféré du réacteur à lit fluidisé (4) au réacteur à lit fluidisé (3 à 1) dans la direction opposée par l'intermédiaire de canalisations de liaison (19), **caractérisée en ce que** le premier réacteur à lit fluidisé (1) dans la direction de circulation du matériau contenant de l'oxyde de fer possède un volume intérieur inférieur à celui des réacteurs à lit fluidisé (2 à 4) disposés en aval dans la direction de circulation du matériau contenant de l'oxyde de fer.

32. Installation selon une ou plusieurs des revendications 28 à 31, **caractérisée en ce qu'**à partir de la canalisation de liaison (19) qui relie le premier réacteur à lit fluidisé (1) au réacteur à lit fluidisé (2) installé en aval, s'étend en dérivation une canalisation de dérivation (30), qui débouche dans une canalisation (8) d'évacuation du gaz produit au niveau haut, qui évacue des gaz d'échappement provenant du premier réacteur à lit fluidisé (1) (figures 4 à 8).
